# EUROPÄISCHE PATENTSCHRIFT

(11) **EP 3 632 755 B1**
(45) Veröffentlichungstag und Bekanntmachung des Hinweises auf die Patenterteilung: **28.04.2021**
(21) Anmeldenummer: 19192093.3
(22) Anmeldetag: 16.08.2019
(51) Int. Cl.: B60T 8/17, B60T 13/68, B60T 11/10

(54) **FAHRZEUG UND ZUGGESPANN**
VEHICLE AND TRACTOR-TRAILER
VÉHICULE ET ATTELAGE DE TRACTION

(30) Priorität: 17.09.2018 DE 102018007318
(43) Veröffentlichungstag der Anmeldung: 08.04.2020
(73) Patentinhaber: CLAAS Tractor S.A.S., 78141 Vélizy-Villacoublay Cedex (FR)
(72) Erfinder: Roger, Fabien, 75019 Paris (FR); Bouchheit, Stéphane, 78350 Jouy en Josas (FR); Galante, Cédric, 91140 Vellebnon-sur-Yvette (FR)
(74) Vertreter: CLAAS Gruppe

(56) Entgegenhaltungen:
- EP-A1- 0 530 460
- GB-A- 2 543 037
- US-A- 4 583 788

## Beschreibung

Die Erfindung betrifft ein Fahrzeug, insbesondere ein landwirtschaftliches Fahrzeug, und ein Zuggespann, in dem ein solches Fahrzeug als Zugfahrzeug oder als gezogenes Fahrzeug zum Einsatz kommt.

Ein Zuggespann kann, insbesondere wenn das gezogene Fahrzeug beladen ist, eine erheblich höhere träge Masse als das Zugfahrzeug haben, so dass die üblicherweise vorhandenen Bremsen des Zugfahrzeugs unzureichend sein können, um das Zuggespann jederzeit sicher abzubremsen. Deswegen muss auch das gezogene Fahrzeug Bremsen aufweisen, die vom Zugfahrzeug aus steuerbar sind.

Um die Bremsen des gezogenen Fahrzeugs zu steuern, ist es bekannt, erste Bremsleitungen von Zugfahrzeug und gezogenem Fahrzeug aneinander zu koppeln, so dass ein hoher Druck, der auf Seiten des Zugfahrzeug in die erste Bremsleitung eingespeist wird, um erste Bremsen zu aktivieren, sich in die erste Bremsleitung des gezogenen Fahrzeugs ausbreiten und auch dort zur Aktivierung der Bremsen genutzt werden kann. Für den Fall, dass der Bremsdruck auf der ersten Bremsleitung ausfällt und deshalb die ersten Bremsen nicht mehr aktiviert werden können, ist z.B. aus EP 3 275 745 A1 bekannt, eine zweite Bremsleitung vorzusehen, die, solange auf ihr hoher Druck herrscht, eine zweite Bremse des gezogenen Fahrzeugs inaktiv hält und stattdessen aktiv wird, wenn der hohe Druck zusammenbricht.

Nachteilig ist hier, dass ein Druckabfall zu einem abrupten, vom Fahrer unerwarteten und unkontrollierten Bremseingriff führt, der wiederum die Fahrsicherheit beeinträchtigt.

Aus WO 2017/050632 A1 sind ein Bremssystem und ein Steuerverfahren dafür bekannt, bei dem eine erste Bremse sowohl durch hohen Druck auf einer ersten Bremsleitung als auch durch niedrigen Druck auf einer zweiten Bremsleitung aktivierbar ist und im Falle einer Störung auf einer der beiden Bremsleitungen durch die jeweils geeignete Druckänderung auf der jeweils anderen Bremsleitung aktiviert wird. Auch hier ergibt sich das Problem, dass ein Druckzusammenbruch auf der ersten Bremsleitung zu einer unerwarteten Bremsung führt.

EP 0 530 460 A1 offenbart eine Anhängerbremsanlage bei der mittels einer Steuerelektronik die automatische Anhängerbremsung solange verhindert wird, wie der Druck in dem Druckspeicher nicht auf einen vorbestimmten Sicherungsdruck abgefallen ist.

Ziel der vorliegenden Erfindung, ist, ein Zuggespann bzw. zur Bildung eines Zuggespanns geeignete Fahrzeuge zu schaffen, die sowohl eine sichere Bremsung gewährleisten als auch eine unerwartete Bremsung bei einem Druckzusammenbruch zu verhindern vermögen.

Die Aufgabe wird einerseits gelöst, indem bei einem Zugfahrzeug für ein Zuggespann mit
einer Druckquelle,
einer ersten und einer zweiten Bremsleitung, die mit der Druckquelle verbunden sind,
wobei eine erste Bremse des Zugfahrzeugs mit der ersten Bremsleitung verbunden und durch hohen Druck auf der ersten Bremsleitung aktivierbar sein kann und/oder eine zweite Bremse des Zugfahrzeugs mit der zweiten Bremsleitung verbunden und durch niedrigen Druck auf der zweiten Bremsleitung aktivierbar sein kann,
einer ersten Kupplung zum Kuppeln der ersten Bremsleitung an ein gezogenes Fahrzeug,
einer zweiten Kupplung zum Kuppeln der zweiten Bremsleitung an das gezogene Fahrzeug,
einer ersten Schaltventilanordnung, die in der ersten Bremsleitung angeordnet ist und einen der Druckquelle zugewandten Anschluss und einen der ersten Kupplung zugewandten Anschluss aufweist, um die erste Kupplung selektiv mit Fluid unter hohem Druck zu versorgen,
einer zweiten Schaltventilanordnung, die in der zweiten Bremsleitung angeordnet ist und einen der Druckquelle zugewandten Anschluss und einen der zweiten Kupplung zugewandten Anschluss hat, um die zweite Bremsleitung selektiv mit Fluid unter hohem Druck zu versorgen,
die zweite Schaltventilanordnung eingerichtet ist, einen Sperrzustand einzunehmen, wenn der Druck am der Druckquelle zugewandten Anschluss niedriger ist als am der zweiten Kupplung zugewandten Anschluss.

Das Sperrventil ermöglicht im Falle eines Versagens der Druckquelle eine wenigstens zeitweilige Aufrechterhaltung des hohen Drucks auf der zweiten Bremsleitung, so dass eine durch den Druckzusammenbruch verursachte Bremsung verzögert und allmählich eintritt und dem Fahrer Gelegenheit gegeben wird, sich darauf einzustellen.

Für diese Wirkung ist es nicht entscheidend, ob die Sperrventilanordnung sich in der zweiten Bremsleitung auf Seiten des Zugfahrzeugs oder des gezogenen Fahrzeugs befindet; deswegen wird die Aufgabe ebenfalls gelöst durch ein gezogenes Fahrzeug mit:
einer ersten und einer zweiten Bremsleitung,
einer ersten Kupplung zum Kuppeln der ersten Bremsleitung an ein Zugfahrzeug,
einer zweiten Kupplung zum Kuppeln der zweiten Bremsleitung an das Zugfahrzeug,
wenigstens einer ersten Bremse, die mit der ersten Bremsleitung verbunden und eingerichtet ist bei hohem Druck auf der ersten Bremsleitung aktiv und bei niedrigem Druck auf der ersten Bremsleitung inaktiv zu sein, und
wenigstens einer zweiten Bremse, die mit der zweiten Bremsleitung verbunden und eingerichtet ist, bei niedrigem Druck auf der zweiten Bremsleitung aktiv und bei hohem Druck auf der zweiten Bremsleitung inaktiv zu sein,
bei dem eine zweite Schaltventilanordnung in der zweiten Bremsleitung angeordnet ist und einen der zweiten Kupplung zugewandten Anschluss und einen der zweiten Bremse zugewandten Anschluss hat, und die zweite Schaltventilanordnung eingerichtet ist, einen Sperrzustand einzunehmen, wenn der Druck am der zweiten Kupplung zugewandten Anschluss niedriger ist als am der zweiten Bremse zugewandten Anschluss.

Wenn die Fahrzeuge zu einem Zuggespann verbunden sind, genügt eine einzige Schaltventilanordnung der oben beschriebenen Art in den miteinander verbundenen zweiten Bremsleitungen der Fahrzeuge, wobei die Schaltventilanordnung sogar auf beide Fahrzeuge verteilt sein kann; das Vorhandensein je einer solchen Schaltventilanordnung an jedem Fahrzeug ist jedoch für die erfindungsgemäße Wirkung nicht schädlich und kann sogar von Vorteil sein, um ein Entweichen von Hydraulikfluid zu vermeiden, falls der Druckzusammenbruch auf eine beschädigte Verbindung zwischen den zweiten Bremsleitungen der beiden Fahrzeuge zurückzuführen ist.

Die Umschaltung in den Sperrzustand kann durch einen Fahrer des Fahrzeugs manuell steuerbar sein; um eine schnelle Reaktion ohne Zutun des Fahrers zu gewährleisten, ist sie vorzugsweise durch einen hydrostatischen Druck gesteuert.

Vorzugsweise ist der die Umschaltung steuernde Druck ein auf der zweiten Bremsleitung zwischen der Druckquelle und der zweiten Schaltventilanordnung herrschender Druck.

Um diesen Druck zu erfassen, kann ein Druckfühler an der zweiten Bremsleitung zwischen der Druckquelle und der zweiten Schaltventilanordnung vorgesehen sein. Genauso wie die zweite Schaltventilanordnung kann der Druckfühler wahlweise am Zugfahrzeug oder am gezogenen Fahrzeug vorgesehen sein.

Der Druckfühler kann in erster Linie zum Steuern des Sperrventils dienen. Insbesondere in diesem Fall sollte er an demselben Fahrzeug wie die die zweite Schaltventilanordnung vorgesehen sein.

Ein vorteilhafter Nebeneffekt des Druckfühlers ist allerdings, dass sein Ausgangssignal auch einem Anzeigeinstrument zugeführt werden kann, um dem Fahrer die Ausgabe des Druckfühlers anzuzeigen. So kann der Fahrer rechtzeitig vorgewarnt werden, bevor der Druckabfall auf der zweiten Bremsleitung eine Bremswirkung hervorruft. Ein hierfür vorgesehener Druckfühler befindet sich vorzugsweise am Zugfahrzeug.

Als die Umschaltung automatisch herbeiführender Teil der zweiten Schaltventilanordnung kommt auch ein Rückschlagventil in Betracht. Der oben beschriebene Druckfühler kann auch mit dem Rückschlagventil kombiniert werden, um den Fahrer auf eine zu erwartende Bremswirkung hinzuweisen. Alternativ kann ein Druckfühler mit binärem Ausgangssignal hier durch einen Schalter gebildet sein, der den Zustand - offen oder geschlossen - des Rückschlagventils überwacht und an das Anzeigeinstrument überträgt.

Um das Einsetzen der Bremswirkung zu verzögern, kann ein Druckspeicher mit der zweiten Bremsleitung zwischen der zweiten Schaltventilanordnung und der zweiten Bremse verbunden sein.

Gegenstand der Erfindung ist ferner ein Zuggespann mit einem Zugfahrzeug und einem gezogenen Fahrzeug, von denen wenigstens eines ein Fahrzeug der oben beschriebenen Art ist.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: ein Zuggespann mit einem Zugfahrzeug und einem gezogenen Fahrzeug gemäß einer ersten Ausgestaltung der Erfindung;
- Fig. 2: einen Ausschnitt aus dem Bremssystem des Zugfahrzeugs gemäß einer zweiten Ausgestaltung; und
- Fig. 3: einen Ausschnitt aus dem Bremssystem von Zugfahrzeug und gezogenem Fahrzeug gemäß einer dritten Ausgestaltung.

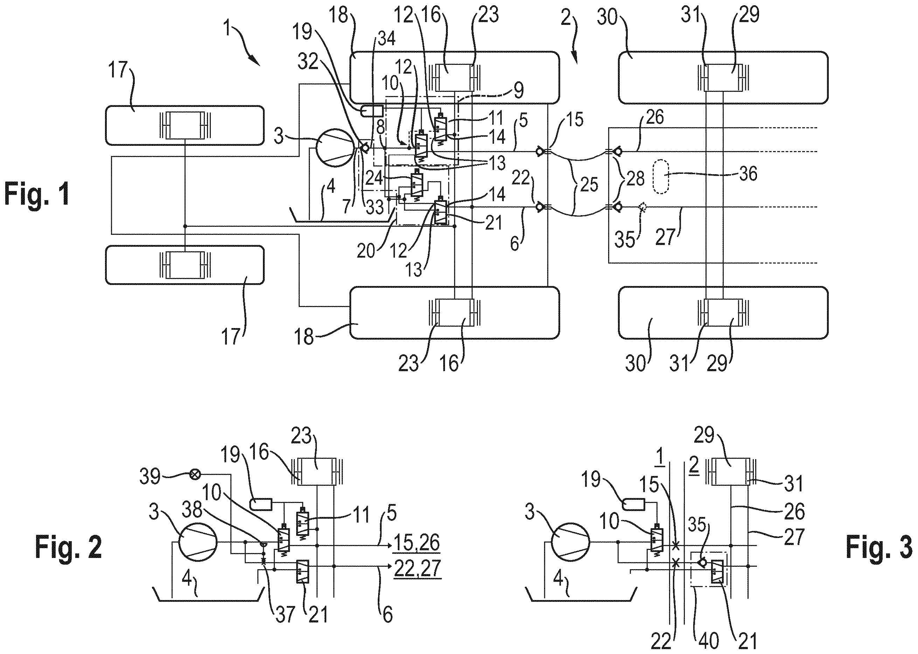

Fig. 1 zeigt schematisch ein Zuggespann mit einem Zugfahrzeug 1, insbesondere einem Traktor, und einem gezogenen Fahrzeug 2, z.B. einem Anhänger, einer Ernte- oder Bodenbearbeitungsmaschine. Die Fig. zeigt nur eine Achse des gezogenen Fahrzeugs 2; weitere Achsen können vorhanden sein.

Das Zugfahrzeug 1 umfasst eine Pumpe 3, die Hydraulikflüssigkeit aus einem Niederdruckreservoir 4 ansaugt und in eine Hochdruckleitung einspeist. Die Hochdruckleitung umfasst eine erste Bremsleitung 5 und eine zweite Bremsleitung 6. Die Bremsleitungen 5, 6 verlaufen ab dem Auslass der Pumpe 3 auf einem Leitungsabschnitt 7 gemeinsam und trennen sich voneinander an einer Verzweigung 8.

In der in Fig. 1 gezeigten Ausgestaltung umfasst eine in der ersten Bremsleitung 5 angeordnete erste Schaltventilanordnung 9 zwei Wegeventile 10, 11. Das Wegeventil 10 hat einen der Pumpe 3 zugewandten Anschluss 12, einen dem Niederdruckreservoir 4 zugewandten Anschluss 13 und einen Anschluss 14, der einer zum gezogenen Fahrzeug 2 führenden Kupplung 15 zugewandt ist, und ist umschaltbar zwischen einer Stellung, in der die Anschlüsse 12 und 14 miteinander kommunizieren, und einem in der Fig.1 gezeigten Zustand, in dem die Anschlüsse 13 und 14 miteinander kommunizieren. Das Wegeventil 11 hat ebenfalls der Pumpe 3 und dem Niederdruckreservoir 4 zugewandte Anschlüsse, der Anschluss 15 ist mit Bremszylindern 16 von ersten Bremsen an Vorder- und Hinterrädern 17, 18 des Zugfahrzeugs verbunden. Diese ersten Bremsen werden in üblicher Weise durch einen hohen Druck in den Bremszylindern 16 wirksam. Indem beide Wegeventile 10, 11 unterschiedliche Stellungen einnehmen, kann sichergestellt werden, dass eine Undichtigkeit jenseits der Kupplung 15 nicht zu einem die Bremsfähigkeit beeinträchtigenden Druckabfall an den Bremszylindern 16 führen kann.

Die Wegeventile 10, 11 können durch ein einziges Wegeventil ersetzt sein, von dem ein Anschluss Pumpe 3 und einer dem Niederdruckreservoir 4 zugewandt ist und der dritte sowohl mit den Bremszylindern 16 als auch mit der Kupplung 15 verbunden ist; dann ist allerdings durch andere geeignete Maßnahmen sicherzustellen, dass eine Undichtigkeit jenseits der Kupplung 15 nicht zu einem Verlust der Bremsfähigkeit des Zugfahrzeugs 1 führen kann.

Die Wegeventile 10, 11 sind vorzugsweise Proportionalventile, deren Stellung durch ein Bremspedal 19 gesteuert ist; so kann ein zur Betätigung des Bremspedals 19 proportionaler Druck in den jenseits der Wegeventile 10, 11 liegenden Teilen der Bremsleitung 5 eingestellt werden.

In der zweiten Bremsleitung 5 ist eine zweite Schaltventilanordnung 20 vorgesehen. Diese umfasst ein Wegeventil 21, das wie die Wegeventile 10, 11 einen der Pumpe 3 zugewandten Anschluss 12 und einen dem Niederdruckreservoir 4 zugewandten Anschluss 14 hat. Ein dritter Anschluss 13 ist einer zweiten Kupplung 22 sowie Bremszylindern 23 einer auf die Räder 17, 18 des Zugfahrzeugs 1 wirkenden zweiten Bremse oder Feststellbremse zugewandt. Die Wirkungsweise der zweiten Bremse ist entgegengesetzt zur ersten: Durch einen hohen Druck in den Bremszylindern 23 werden Reibflächen der zweiten Bremse voneinander beabstandet gehalten; fällt dieser ab, dann kommen die Reibflächen in Kontakt miteinander und die Bremswirkung setzt ein.

Das Wegeventil 21 kann, wie in Fig. 1 gezeigt, über ein Vorsteuerventil 24 angesteuert sein, das einen mit der zweiten Bremsleitung 6 verbundenen ersten Anschluss, einen mit dem Niederdruckreservoir 4 verbundenen zweiten Anschluss und einen mit dem Wegeventil 21 verbundenen Steueranschluss aufweist.

Die Kupplungen 15, 22 sind als Steckkupplungen ausgeführt, an die eine komplementäre Kupplung eines zum gezogenen Fahrzeug führenden Schlauchs 25 koppelbar ist. Sie umfassen jeweils ein selbsttätiges Absperrventil, das z.B. durch eine Feder permanent in eine geschlossene Stellung beaufschlagt ist und durch Kontakt mit der komplementären Kupplung des Schlauchs 25 in eine offene Stellung auslenkbar ist.

Der Schlauch 25 kann an einem zweiten Ende mit einer ersten bzw. zweiten Bremsleitung 26, 27 des gezogenen Fahrzeugs 2 fest oder über ein weiteres Paar von Kupplungen 28 lösbar verbunden sein. Die erste Bremsleitung 26 ist mit Bremszylindern 29 von Rädern 30 des gezogenen Fahrzeugs 2 verbunden, die wie die Bremszylinder 16 des Zugfahrzeugs 1 bei hohem Druck wirksam werden; mit der zweiten Bremsleitung 27 verbundene Bremszylinder 31 sind wie die Bremszylinder 23 angeordnet, um bei niedrigem Druck wirksam zu werden.

Zur zweiten Schaltventilanordnung 20 gehört ferner ein Rückschlagventil 32. Das Rückschlagventil 32 ist in der zweiten Bremsleitung 6 des Zugfahrzeugs 1 in einer Orientierung montiert, in der ein Druck an einem der Pumpe 3 zugewandten Anschluss 33 des Rückschlagventil 32, der höher ist als der gleichzeitig an einem der Kupplung 22 zugewandten Anschluss 34 herrschende Druck, Rückschlagventil 32 öffnet, während ein höherer Druck am Anschluss 34 das Ventil geschlossen hält, so dass es in dem Fall, dass der Druck in dem der Pumpe 3 zugewandten Teil der Bremsleitung 6 niedriger ist als im den Bremszylindern 23, 31 zugewandten Teil, einen Ausgleich des hohen Drucks im den Bremszylindern 23, 31 zugewandten Teil der Bremsleitung 6 verhindert.

Indem somit dieser hohe Druck nach einem Ausfall der Pumpe 3 oder einem anderen, zu einer Druckabnahme im der Pumpe 3 zugewandten Teil der Bremsleitung 6 führenden Ereignis zumindest noch eine Zeitlang bestehen bleibt, kann ein abruptes und für den Fahrer unerwartetes Wirksamwerden der Bremszylinder 23, 31 verhindert werden.

Fig. 1 zeigt das Rückschlagventil 32 im den beiden Bremsleitungen 5, 6 des Zugfahrzeugs gemeinsamen Leitungsabschnitt 7. An dieser Position kann das Rückschlagventil 32 auch dazu beitragen, einen hohen Druck in der ersten Bremsleitung 5 aufrechtzuerhalten, bietet aber keinen Schutz in dem Fall, dass der Grund für die Druckabnahme ein Defekt, wie etwa eine Undichtigkeit, in der ersten Bremsleitung 5 ist. Um sich hiergegen abzusichern, kann das Rückschlagventil 32 abweichend von der Darstellung der Fig. 1 in der zweiten Bremsleitung 6 z.B. zwischen der Verzweigung 8 und dem zweiten Wegeventil 21 angeordnet sein.

Denkbar ist auch, wie in der Fig. 1 gestrichelt angedeutet, ein Rückschlagventil 35 in der zweiten Bremsleitung 27 des gezogenen Fahrzeugs 2 vorzusehen. Indem dieses bei einem Druckabfall in der zweiten Bremsleitung 6 des Zugfahrzeugs 1 schließt, kann die Funktion der Bremszylinder 29 selbst dann noch zeitweilig aufrechterhalten werden, wenn eine Ursache für den Druckabfall in der zweiten Bremsleitung 6 des Zugfahrzeugs 1 selbst liegt.

Im einen wie im anderen Falle kann die Zeitspanne, bis der Druck in den Bremszylindern 31 so weit abgefallen ist, dass die Bremswirkung an den Rädern 30 einsetzt, mit Hilfe eines Druckspeichers 36 verlängert werden, der zwischen dem Wegeventil 21 und den Bremszylindern 31 an die zweite Bremsleitung 6, 27, vorzugsweise die auf zweite Bremsleitung 27 des gezogenen Fahrzeugs 3, angeschlossen ist.

In dem Fall, dass das Rückschlagventil 32 auf Seiten des Zugfahrzeugs 1 angeordnet ist, kann der Druck im Druckspeicher 36 sich im Störungsfall bis ins Zugfahrzeug 1 ausbreiten und so auch dazu dienen, einen hohen Druck an den Bremsen des Zugfahrzeugs 1 zeitweilig aufrechtzuerhalten.

Im Falle der Fig. 2 ist das Rückschlagventil durch ein elektrisch gesteuertes Absperrventil 37 wie etwa ein Magnetventil ersetzt, das durch einen Druckfühler 38 gesteuert ist. Der Druckfühler 38 ist dem in der zweiten Bremsleitung 6 zwischen der Pumpe 3 und dem Wegeventil 21 herrschenden Druck ausgesetzt und veranlasst das Schließen des Absperrventils 37, wenn der erfasste Druck unter einen vorgegebenen Grenzwert sinkt. Ein Signalausgang des Druckfühlers 38 ist ferner mit einem Anzeigeinstrument 39 verbunden, das in einer Fahrerkabine des Zugfahrzeugs 1 angebracht ist, um den Fahrer auf den Druckabfall hinzuweisen und vor der deswegen demnächst einsetzenden Bremswirkung zu warnen.

Der Druckfühler 38 könnte auch bei der Ausgestaltung der Fig. 1 zwischen der Pumpe 3 und dem Rückschlagventil 35 angeordnet sein, um das Anzeigeinstrument 37 anzusteuern; alternativ kann hierfür ein durch die Stellung des Schließkörpers betätigter Schalter am Rückschlagventil 35 vorgesehen sein.

Die Ausgestaltung der Fig. 3 unterscheidet sich von denen der Fig. 1 und 2 im Wesentlichen durch die Platzierung der zweiten Schaltventilanordnung, hier mit 40 bezeichnet. Das Wegeventil 21 und das Rückschlagventil 35, aus denen sie sich zusammensetzt, sind dieselben wie in der Ausgestaltung der Fig. 1; anders als bei jener ist die Schaltventilanordnung 40 auf Seiten des gezogenen Fahrzeugs 2 angebracht, so dass das Rückschlagventil 35 einen hohen Druck in den Bremszylindern 31 auch dann noch aufrechterhalten kann, wenn eine Störung auf Seiten des Zugfahrzeugs 1 bereits zu einem Abfall des Drucks in den Bremszylindern 23 und damit zum Wirksamwerden der Feststellbremse geführt hat.

### Bezugszeichenliste

- 1: Zugfahrzeug
- 2: gezogenes Fahrzeug
- 3: Pumpe
- 4: Niederdruckreservoir
- 5: erste Bremsleitung
- 6: zweite Bremsleitung
- 7: Leitungsabschnitt
- 8: Verzweigung
- 9: erste Schaltventilanordnung
- 10: Wegeventil
- 11: Wegeventil
- 12: Anschluss
- 13: Anschluss
- 14: Anschluss
- 15: Kupplung
- 16: Bremszylinder
- 17: Vorderrad
- 18: Hinterrad
- 19: Bremspedal
- 20: zweite Schaltventilanordnung
- 21: Wegeventil
- 22: Kupplung
- 23: Bremszylinder
- 24: Vorsteuerventil
- 25: Schlauch
- 26: erste Bremsleitung
- 27: zweite Bremsleitung
- 28: Kupplung
- 29: Bremszylinder
- 30: Rad
- 31: Bremszylinder
- 32: Rückschlagventil
- 33: Rückschlagventil
- 34: Anschluss
- 35: Anschluss
- 36: Druckspeicher
- 37: Absperrventil
- 38: Druckfühler
- 39: Anzeigeinstrument
- 40: zweite Schaltventilanordnung

## Patentansprüche

1. Fahrzeug, insbesondere Zugfahrzeug (1), zum Bilden eines Zuggespanns zusammen mit einem gezogenen Fahrzeug (2), wobei das Zugfahrzeug (1) aufweist:
- eine Druckquelle (3),
- eine erste und eine zweite Bremsleitung (5, 6), die mit der Druckquelle (3) verbunden sind,
- eine erste Kupplung (15) zum Kuppeln der ersten Bremsleitung (5) an ein gezogenes Fahrzeug (2),
- eine zweite Kupplung (22) zum Kuppeln der zweiten Bremsleitung (6) an das gezogene Fahrzeug (2),
- eine erste Schaltventilanordnung (9), die in der ersten Bremsleitung (5) angeordnet ist und einen der Druckquelle (3) zugewandten Anschluss (12) und einen der ersten Kupplung (15) zugewandten Anschluss (13) aufweist, um die erste Kupplung (15) selektiv mit Fluid unter hohem Druck zu versorgen,
- eine zweite Schaltventilanordnung (20), die in der zweiten Bremsleitung (6) angeordnet ist und einen der Druckquelle (3) zugewandten Anschluss (33) und einen der zweiten Kupplung (22) zugewandten Anschluss (13) hat, um die zweite Kupplung (22) selektiv mit Fluid unter hohem Druck zu versorgen,
**dadurch gekennzeichnet, dass** die zweite Schaltventilanordnung (20) eingerichtet ist, einen Sperrzustand einzunehmen, wenn der Druck am der Druckquelle (3) zugewandten Anschluss (33) niedriger ist als am der zweiten Kupplung (22) zugewandten Anschluss (13).

2. Fahrzeug, insbesondere gezogenes Fahrzeug (2), zum Bilden eines Zuggespanns zusammen mit einem Zugfahrzeug (1), wobei das gezogene Fahrzeug (2) aufweist:
- eine erste und eine zweite Bremsleitung (26, 27),
- eine erste Kupplung (15) zum Kuppeln der ersten Bremsleitung (26) an ein Zugfahrzeug (1),
- eine zweite Kupplung (22) zum Kuppeln der zweiten Bremsleitung (27) an das Zugfahrzeug (1),
- wenigstens eine erste Bremse (29), die mit der ersten Bremsleitung (26) verbunden und eingerichtet ist bei hohem Druck auf der ersten Bremsleitung aktiv und bei niedrigem Druck auf der ersten Bremsleitung (26) inaktiv zu sein, und
- wenigstens eine zweite Bremse (31), die mit der zweiten Bremsleitung (27) verbunden und eingerichtet ist, bei niedrigem Druck auf der zweiten Bremsleitung (27) aktiv und bei hohem Druck auf der zweiten Bremsleitung (27) inaktiv zu sein,
**dadurch gekennzeichnet, dass** eine zweite Schaltventilanordnung (40) in der zweiten Bremsleitung (27) angeordnet ist und einen der zweiten Kupplung (22) zugewandten Anschluss und einen der zweiten Bremse (31) zugewandten Anschluss hat, und die zweite Schaltventilanordnung (40) eingerichtet ist, einen Sperrzustand einzunehmen, wenn der Druck am der zweiten Kupplung (22) zugewandten Anschluss niedriger ist als am der zweiten Bremse (31) zugewandten Anschluss.

3. Fahrzeug nach Anspruch 1 oder 2, **dadurch gekennzeichnet, dass** die Umschaltung in den Sperrzustand durch einen hydrostatischen Druck gesteuert ist.

4. Fahrzeug nach Anspruch 3, **dadurch gekennzeichnet, dass** der die Umschaltung steuernde Druck ein auf der zweiten Bremsleitung (6, 27) zwischen der Druckquelle (3) und der zweiten Schaltventilanordnung (20, 40) herrschender Druck ist.

5. Fahrzeug nach einem der vorhergehenden Ansprüche, **dadurch gekennzeichnet, dass** das die zweite Schaltventilanordnung (20, 40) ein Rückschlagventil (32, 35) umfasst.

6. Fahrzeug nach einem der vorhergehenden Ansprüche, **dadurch gekennzeichnet, dass** ein Druckfühler (38) an der zweiten Bremsleitung (6, 27) zwischen der Druckquelle (3) und der zweiten Schaltventilanordnung (20) vorgesehen ist.

7. Fahrzeug nach Anspruch 6, **dadurch gekennzeichnet, dass** die Umschaltung in den Sperrzustand durch den Druckfühler (38) gesteuert ist.

8. Fahrzeug, insbesondere Zugfahrzeug, nach Anspruch 6 oder 7, **dadurch gekennzeichnet, dass** es ein Anzeigeinstrument (39) zum Anzeigen der Ausgabe des Druckfühlers (38) aufweist.

9. Fahrzeug, insbesondere gezogenes Fahrzeug, nach einem der vorhergehenden Ansprüche, **dadurch gekennzeichnet, dass** ein Druckspeicher (36) mit der zweiten Bremsleitung (6, 27) zwischen der Sperrventilanordnung (20, 40) und der zweiten Bremse (31) verbunden ist.

10. Zuggespann mit einem Zugfahrzeug und einem gezogenen Fahrzeug, von denen wenigstens eines ein Fahrzeug nach einem der vorhergehenden Ansprüche ist.

## Claims

1. A vehicle, in particular a traction vehicle (1), for forming a tractor-trailer combination together with a drawn vehicle (2), wherein the traction vehicle (1) comprises:
- a pressure source (3),
- a first and a second brake line (5, 6) which are connected to the pressure source (3),
- a first coupling (15) for coupling the first brake line (5) to a drawn vehicle (2),
- a second coupling (22) for coupling the second brake line (6) to the drawn vehicle (2),
- a first on-off valve assembly (9) which is disposed in the first brake line (5) and has a connection (12) facing the pressure source (3) and a connection (13) facing the first coupling (15) in order to selectively supply the first coupling (15) with fluid under high pressure,
- a second on-off valve assembly (20) which is disposed in the second brake line (6) and has a connection (33) facing the pressure source (3) and a connection (13) facing the second coupling (22) in order to selectively supply the second coupling (22) with fluid under high pressure,
**characterized in that** the second on-off valve assembly (20) is configured to take up a shut-off position when the pressure at the connection (33) facing the pressure source (3) is lower than that at the connection (13) facing the second coupling (22).

2. A vehicle, in particular a drawn vehicle (2), for forming a tractor-trailer combination together with a traction vehicle (1), wherein the drawn vehicle (2) comprises:
- a first and a second brake line (26, 27),
- a first coupling (15) for coupling the first brake line (26) to a traction vehicle (1),
- a second coupling (22) for coupling the second brake line (27) to the traction vehicle (1),
- at least one first brake (29) which is connected to the first brake line (26) and is configured to be active when the pressure in the first brake line is high and to be inactive when the pressure in the first brake line (26) is low, and
- at least one second brake (31) which is connected to the second brake line (27) and is configured to be active when the pressure in the second brake line (27) is low and to be inactive when the pressure in the second brake line is high (27),
**characterized in that** a second on-off valve assembly (40) is disposed in the second brake line (27) and has a connection facing the second coupling (22) and a connector facing the second brake (31), and the second on-off valve assembly (40) is configured to take up a shut-off position when the pressure at the connection facing the second coupling (22) is lower than that at the connection facing the second brake (31).

3. The vehicle according to claim 1 or claim 2, **characterized in that** the changeover into the shut-off position is controlled by a hydrostatic pressure.

4. The vehicle according to claim 3, **characterized in that** the pressure controlling the changeover is a pressure prevailing in the second brake line (6, 27) between the pressure source (3) and the second on-off valve assembly (20, 40).

5. The vehicle according to one of the preceding claims, **characterized in that** the second on-off valve assembly (20, 40) comprises a non-return valve (32, 35).

6. The vehicle according to one of the preceding claims, **characterized in that** a pressure sensor (38) is provided on the second brake line (6, 27) between the pressure source (3) and the second on-off valve assembly (20).

7. The vehicle according to claim 6, **characterized in that** the changeover into the shut-off position is controlled by the pressure sensor (38).

8. The vehicle, in particular a traction vehicle, according to claim 6 or claim 7, **characterized in that** it has a display instrument (39) for displaying the output from the pressure sensor (38).

9. The vehicle, in particular a drawn vehicle, according to one of the preceding claims, **characterized in that** an accumulator (36) is connected to the second brake line (6, 27) between the on-off valve assembly (20, 40) and the second brake (31).

10. A tractor-trailer combination with a traction vehicle and a drawn vehicle, of which at least one is a vehicle according to one of the preceding claims.

## Revendications

1. Véhicule, en particulier véhicule de traction (1), pour former un attelage tracté conjointement avec un véhicule tracté (2), le véhicule de traction (1) comportant :
- une source de pression (3),
- une première et une seconde conduite de freinage (5, 6) qui sont reliées à la source de pression (3),
- un premier accouplement (15) pour coupler la première conduite de freinage (5) à un véhicule tracté (2),
- un second accouplement (22) pour coupler la seconde conduite de freinage (6) au véhicule tracté (2),
- un premier agencement de valve de commande (9) qui est disposé sur la première conduite de freinage (5) et un raccord (12) tourné vers la source de pression (3) et un raccord (13) tourné vers le premier accouplement (15) afin d'alimenter sélectivement le premier accouplement (15) avec du fluide sous haute pression,
- un second agencement de valve de commande (20) qui est disposé sur la seconde conduite de freinage (6) et possède un raccord (33) tourné vers la source de pression (3) et un raccord (13) tourné vers le second accouplement (22) afin d'alimenter sélectivement le second accouplement (22) avec du fluide sous haute pression,
**caractérisé en ce que** le second agencement de valve de commande (20) est agencé pour adopter un état fermé lorsque la pression au raccord (33) tourné vers la source de pression (3) est plus basse qu'au raccord (13) tourné vers le second accouplement (22).

2. Véhicule, en particulier véhicule tracté (2) pour former un attelage tracté conjointement avec un véhicule de traction (1), le véhicule tracté (2) comportant :
- une première et une seconde conduite de freinage (26, 27),
- un premier accouplement (15) pour coupler la première conduite de freinage (26) à un véhicule de traction (1),
- un second accouplement (22) pour coupler la seconde conduite de freinage (27) au véhicule de traction (1),
- au moins un premier frein (29) qui est relié à la première conduite de freinage (26) et agencé pour être actif en présence d'une haute pression dans la première conduite de freinage et inactif en présence d'une basse pression dans la première conduite de freinage (26), et
- au moins un second frein (31) qui est relié à la seconde conduite de freinage (27) et agencé pour être actif en présence d'une basse pression dans la seconde conduite de freinage (27) et inactif en présence d'une haute pression dans la seconde conduite de freinage (27),
**caractérisé en ce qu'**un second agencement de valve de commande (40) est disposé sur la seconde conduite de freinage (27) et possède un raccord tourné vers le second accouplement (22) et un raccord tourné vers le second frein (31), et le second agencement de valve de commande (40) est agencé pour adopter un état fermé lorsque la pression au raccord tourné vers le second accouplement (22) est plus basse qu'au raccord tourné vers le second frein (31).

3. Véhicule selon la revendication 1 ou 2, **caractérisé en ce que** la commutation vers l'état fermé est commandée par l'intermédiaire d'une pression hydrostatique.

4. Véhicule selon la revendication 3, **caractérisé en ce que** la pression commandant la commutation est une pression régnant dans la seconde conduite de freinage (6, 27) entre la source de pression (3) et le second agencement de valve de commande (20, 40) .

5. Véhicule selon une des revendications précédentes, **caractérisé en ce que** le second agencement de valve de commande (20, 40) inclut une valve anti-retour (32, 35).

6. Véhicule selon une des revendications précédentes, **caractérisé en ce qu'**un capteur de pression (38) est prévu sur la seconde conduite de freinage (6, 27) entre la source de pression (3) et le second agencement de valve de commande (20) .

7. Véhicule selon la revendication 6, **caractérisé en ce que** la commutation vers l'état fermé est commandée par l'intermédiaire du capteur de pression (38).

8. Véhicule, en particulier véhicule de traction, selon la revendication 6 ou 7, **caractérisé en ce qu'**il comporte un instrument d'affichage (39) pour afficher la sortie du capteur de pression (38) .

9. Véhicule, en particulier véhicule tracté, selon une des revendications précédentes, **caractérisé en ce qu'**un accumulateur de pression (36) est relié à la seconde conduite de freinage (6, 27) entre l'agencement de valve de fermeture (20, 40) et le second frein (31).

10. Attelage tracté comprenant un véhicule de traction et un véhicule tracté, parmi lesquels au moins un est un véhicule selon une des revendications précédentes.
